# EUROPEAN PATENT APPLICATION

(11) **EP 4 102 442 A1**
(43) Date of publication of application: **14.12.2022**
(21) Application number: 20917431.7
(22) Date of filing: 02.10.2020
(51) Int. Cl.: G06Q 50/04, G06Q 30/08

(54) **MANUFACTURING ORDER PLACEMENT SUPPORT DEVICE, METHOD, AND PROGRAM**

(30) Priority: 07.02.2020 JP 2020020041
(71) Applicant: NTT Communications Corporation, Tokyo 100-8019 (JP)
(72) Inventor: AKABORI, Hideaki, Tokyo 100-8019 (JP); KITA, Yujiro, Tokyo 100-8019 (JP); YAMAKAWA, Kazuhiro, Tokyo 100-8019 (JP)
(74) Representative: Gramm, Lins & Partner Patent- und Rechtsanwälte PartGmbB
(86) International application number: PCT/JP2020/037572
(87) International publication number: WO 2021/157132

(57) **Abstract**

In a manufacturing ordering assistance apparatus, there is received and stored each item of bidding information transmitted from a terminal of a parts manufacturer with respect to bidding item information, for each part, which is published in a browsable state, and it is set to a state where a product manufacturer can browse it only during a certain disclosure period. Then, when the product manufacturer selects the parts manufacturer as the order recipient among the items of bidding information, there is generated and presented information for confirming order reception and placement conditions to the product manufacturer and the parts manufacturer, and when both manufacturers agrees, there is generated order form information to report the order form information along with manufacturing instruction information separately generated to the parts manufacturer as the order recipient.

## Description

### FIELD

Embodiments of the present invention relate to manufacturing ordering assistance apparatus, method and program for assisting in operations, for example, of a product manufacturer, to place an order for parts or the like.

### BACKGROUND

For example, when a manufacturer manufactures an industrial product, in general, a designer creates design drawings of the product and the parts used for the product on a design system using computer-aided design (CAD) or the like, and based on the created design drawings, manually creates, as separate documents, a parts list and a manufacturing instruction including the detailed specification information required for manufacturing the parts and the contents of manufacturing instruction. Then, based on the created parts list and manufacturing instruction, a person in charge of procurement selects, for each part, a processing agent to place an order for manufacturing the part (for example, refer to Patent Literature 1).

### CITATION LIST

### PATENT LITERATURE

Patent Literature 1: Jpn. Pat. Appln. KOKAI Publication No. 2002-189758

### SUMMARY

### TECHNICAL PROBLEM

Now in general, in conventional parts order placement operations, a person in charge of procurement of a product manufacturer selects a parts manufacturer on the basis of its experiences and past order placement results, and places an order after negotiation of the price and the delivery time with a person in charge at the parts manufacturer, detailed adjustment of bidding conditions, and the like on a face-to-face basis, through calls, or under transmission and reception of mails. This has caused many processes and much time in the order placement operations and a very high load on the product manufacturer. Moreover, on the part of a parts manufacturer, it cannot obtain opportunities of negotiation, if not selected by the product manufacturer. This has made it impossible to receive an order even in the presence of an applicable manufacturing resource.

An object of the present invention, which has been conceived in consideration of the aforementioned circumstances, is to provide a technology for making parts order placement operations efficient to reduce a load on a product manufacturer regarding the parts order placement and enabling order reception opportunities of a parts manufacturer to increase.

### SOLUTION TO PROBLEM

In order to solve the aforementioned problem, there is provided a manufacturing ordering assistance apparatus or method according to an aspect of the present invention, with a manufacturing ordering assistance apparatus that enables data transmission between a first terminal used by a product manufacturer and a plurality of second terminals used by a plurality of parts manufacturers via a network, comprising: generating manufacturing instruction information required for manufacturing a part included in design information sent from the first terminal, based on the design information; and acquiring information designating a bidding condition for the part from the first terminal, generating bidding item information including plurality of entries regarding bidding for the part, based on this information designating the bidding condition and the manufacturing instruction information, and transmitting the generated bidding item information to the second terminal. It further comprises: receiving bidding information by the parts manufacturer with respect to the bidding item information from the second terminal and transmitting the received bidding information to the first terminal; and when receiving notification that the parts manufacturer having registered the bidding information is selected as an order recipient from the first terminal in this state, generating order form information representing an order placement content of the part, based on the bidding information and the corresponding bidding item information, and transmitting the generated order form information and the manufacturing instruction information to the second terminal used by the parts manufacturer that has been selected as the order recipient.

### ADVANTAGEOUS EFFECTS OF INVENTION

According to an aspect of the present invention, with the manufacturing ordering assistance apparatus, the bidding item information for the part is generated and published to the parts manufacturer, and the bidding information is registered with respect to the published bidding item information by the parts manufacturer. Therefore, the product manufacturer itself does not need to select the parts manufacturer to present the bidding item information thereto, and its load regarding the parts order placement can be reduced for that. Meanwhile, the parts manufacturer can register the bidding information with respect to the desired bidding item information by browsing the published bidding item information, which enables more order reception opportunities to be obtained.

Moreover, according to an aspect of the present invention, with the manufacturing ordering assistance apparatus, the order form information is automatically generated to be sent to the parts manufacturer as the order recipient. Therefore, the product manufacturer itself does not need to generate the order form, which reduces its load required for parts order placement. Moreover, since the order form information is directly transmitted to the parts manufacturer from the manufacturing ordering assistance apparatus after order placement establishment, order placement timing can be made early. Furthermore, the parts manufacturer can also receive the order form information quickly after the order placement establishment, which enable it to start manufacturing the part quickly.

Namely, according to an aspect of the present invention, there can be provided a technology of making parts order placement operations efficient to reduce a load on a product manufacturer regarding the parts order placement and enabling order reception opportunities of a parts manufacturer to increase.

### BRIEF DESCRIPTION OF THE DRAWINGS

FIG. 1 is a diagram showing an overall configuration of a system including a manufacturing ordering assistance apparatus according to a first embodiment of the present invention.
FIG. 2 is a block diagram showing a hardware configuration of the manufacturing ordering assistance apparatus according to the first embodiment of the present invention.
FIG. 3 is a block diagram showing a software configuration of the manufacturing ordering assistance apparatus according to the first embodiment of the present invention.
FIG. 4 is a flowchart showing the summary of the overall processing procedures and processing contents of manufacturing ordering assistance processing by the manufacturing ordering assistance apparatus shown in FIG. 3.
FIG. 5 is a diagram showing exemplary operations from acquisition of design information to grouping of ordered parts in registration of information required for order placement and publication processing of bidding items.
FIG. 6 is a diagram showing exemplary operations of the publication processing of bidding items in the registration of information required for order placement and the publication processing of bidding items.
FIG. 7 is a flowchart exemplarily showing procedures and the contents of processing according to quotation and order placement from acquisition of bidding information with respect to bidding items to generation and transmission of order placement information.
FIG. 8 is a diagram exemplarily showing assistance operations from the acquisition of bidding information to negotiation between a product manufacturer and a parts manufacturer in the flowchart shown in FIG. 7.
FIG. 9 is a diagram showing exemplary operations from selection of an order recipient to generation and transmission of an order form in the flowchart shown in FIG. 7.

### DETAILED DESCRIPTION

Hereafter, embodiments according to the present invention will be described with reference to the drawings.

### <Embodiment>

### (Configuration Example)

### (1) System

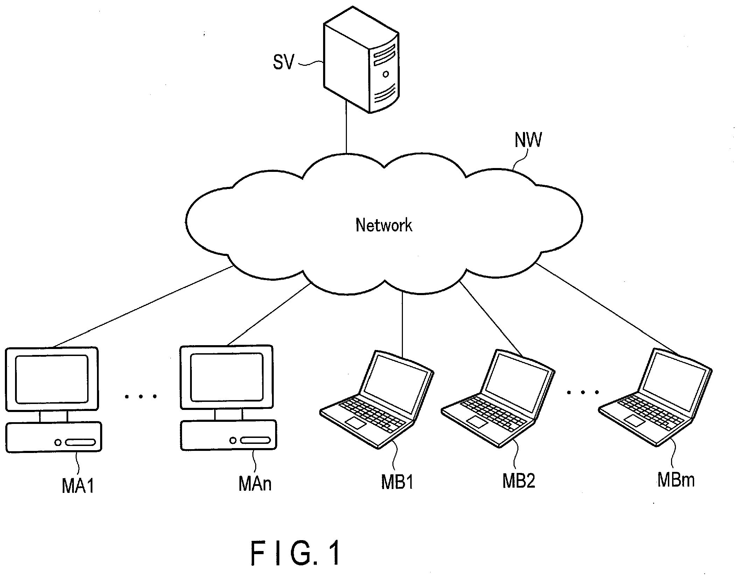

FIG. 1 is a diagram showing a configuration of the overall system including a manufacturing ordering assistance apparatus according to an embodiment of the present invention.

In this example, the system comprises a server computer (hereinafter referred to as server device) SV that operates as the manufacturing ordering assistance apparatus. Further, the server device SV enables data transmission between first terminals MA1 to MAn used by respective product manufacturers (also called set manufacturers) and second terminals MB1 to MBm used by respective parts manufacturers (also called parts manufacturing agents or processing agents) via a network NW.

Each of the first terminals MA1 to MAn is formed, for example, of a CAD system or a personal computer for order placement management. Each of the first terminals MA1 to MAn is mainly used by a person in charge of procurement at a product manufacturer (set manufacturer) and is used for transmitting various kinds of information required for order placement for parts to the aforementioned server device SV, browsing bidding information, such as estimated prices, which the parts manufacturers (processing agents) register in the server device SV, and exchanging mails and messages for quotation negotiation and the like from/to the second terminals MB1 to MBm of the parts manufacturers. Moreover, they are also used for transmitting information for confirming order placement conditions and the like to the server device SV prior to order placement.

Each of the second terminals MB1 to MBm is formed of a personal computer for order reception management. Each of the second terminals MB1 to MBm is used, for example, by a person in charge of sales or a manufacturing engineer at a parts manufacturer (processing agent) and is used for browsing bidding item information published on the server device SV, registering bidding information, such as an estimated price, with respect with the aforementioned bidding item information in the server device SV, and exchanging mails and messages for quotation negotiation and the like from/to the first terminals MA1 to MAn of the product manufacturers. Moreover, they are also used for transmitting information for confirming order reception conditions and the like to the server device SV prior to order reception and downloading order form information and manufacturing instructions from the server device SV.

Notably, the network NW comprises a wide area network having the Internet as its core and access networks for accessing this wide area network, for example. There are used for the access networks, for example, wired and wireless public networks, wired and wireless local area networks (LANs), and cable television (CATV) networks.

### (2) Apparatus

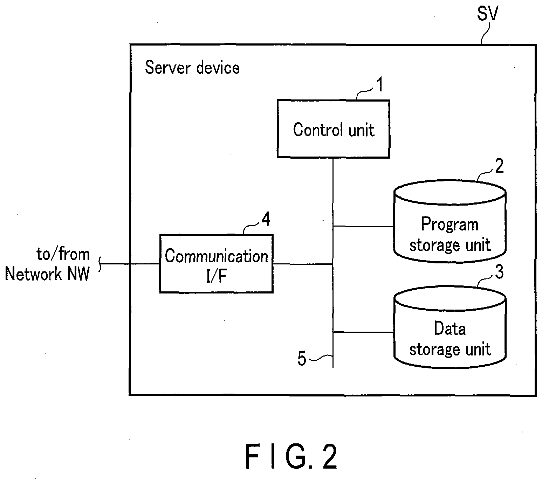

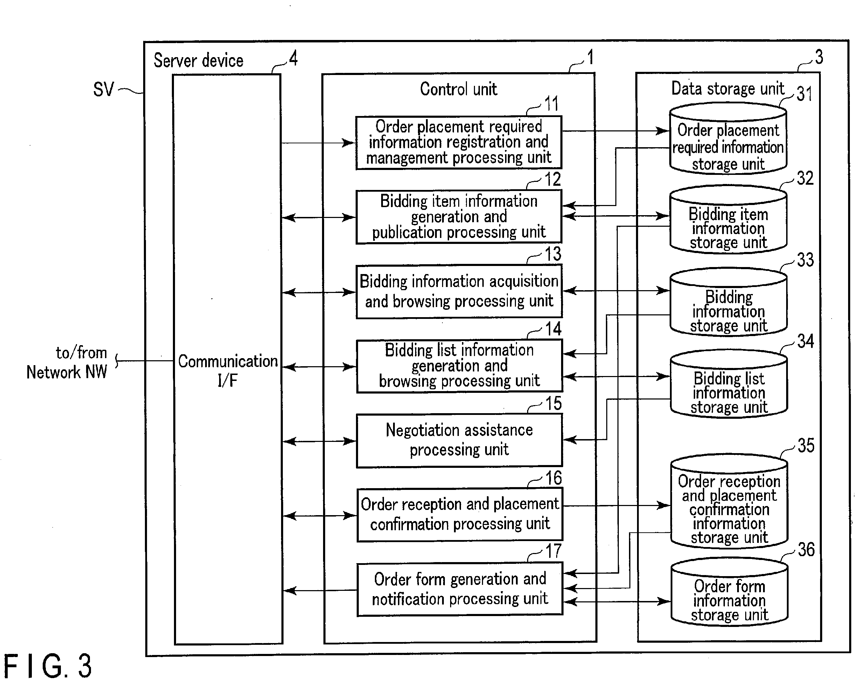

FIG. 2 and FIG. 3 are block diagrams showing a hardware configuration and a software configuration of the server device SV, respectively.

The server device SV comprises a control unit 1 having a hardware processor such as a central processing unit (CPU), and to this control unit 1 via a bus 5, a storage unit having a program storage unit 2 and a data storage unit 3 and a communication interface (communication I/F) 4 are connected.

The communication I/F 4 conducts data transmission between the aforementioned first terminals MA1 to MAn and second terminals MB1 to MBm via the network NW under the control of the control unit 1 and, for example, includes an interface for wired networking.

The program storage unit 2 includes, for example, a combination of a nonvolatile memory upon which writing and reading can be performed at any time, such as a hard disk drive (HDD) or a solid state drive (SSD), and a nonvolatile memory such as a read-only memory (ROM), as a storage medium, and stores, in addition to middleware such as an operating system (OS), program(s) required for executing various kinds of control processing according to an embodiment of the present invention.

The data storage unit 3 includes, for example, a combination of a nonvolatile memory upon which writing and reading can be performed at any time, such as an HDD or an SSD, and a volatile memory such as a random access memory (RAM), as a storage medium, and comprises, as main storage areas for implementing an embodiment of the present invention, an order placement required information storage unit 31, a bidding item information storage unit 32, a bidding information storage unit 33, a bidding list information storage unit 34, an order reception and placement confirmation information storage unit 35, and an order form information storage unit 36.

The order placement required information storage unit 31 is used for storing various kinds of information required for placing an order for parts. The information required for placing an order for parts includes an assembly drawing of a product sent from a product manufacturer (set manufacturer), a parts list generated from this assembly drawing, information representing the contents of manufacturing instruction including processing methods, processing processes and the like of the parts designated by the product manufacturer, specification information designating materials, finishing methods and the like of the parts, manufacturing instruction information, and the like. The manufacturing instruction information is generated from the information representing the contents of manufacturing instruction and the specification information mentioned above.

The bidding item information storage unit 32 is used for storing bidding item information generated for each part. The bidding item information includes information required for manufacturing to be disclosed for the parts manufacturers, and order placement information designated by a product manufacturer (set manufacturer). The information required for manufacturing is extracted from the aforementioned manufacturing instruction. The order placement information includes a desired quantity, a desired manufacturing charge, a desired delivery time, and a disclosure period (bidding reception period).

The bidding information storage unit 33 is used for storing bidding information transmitted from a parts manufacturer (processing agent) with respect to the disclosed bidding item information mentioned above. The bidding information includes an estimated price and bidder information. The bidder information includes company information indicating attributes of the parts manufacturer, and manufacturing resource information representing a manufacturing capacity which the parts manufacturer has.

The bidding list information storage unit 34 is used for storing list information of items of bidding information transmitted from the parts manufacturers (processing agents) with respect to the bidding item information. The bidding list information is edited as a data file which can undergo what is called sorting processing which rearranges the items of bidding information of the parts manufacturers, for example, in the increasing order of the estimated price or in the increasing order of the delivery time. Moreover, the bidding list information may be supplemented, for example, with information representing the result of determining whether or not each parts manufacturer satisfies bidding conditions designated by the product manufacturer (set manufacturer).

The order reception and placement confirmation information storage unit 35 is used for storing order reception and placement confirmation information for mutually confirming order placement conditions and order reception conditions respectively input from the product manufacturer (set manufacturer) and the parts manufacturer (processing agent) selected as the order recipient by the product manufacturer.

The order form information storage unit 36 is used for storing order form information for each part. The order form information includes, for example, information representing the company name of the product manufacturer (set manufacturer) as the order placer, and the name, the price, the delivery time and the quantity of the part.

The control unit 1 comprises, as processing functions according to an embodiment of the present invention, an order placement required information registration and management processing unit 11, a bidding item information generation and publication processing unit 12, a bidding information acquisition and browsing processing unit 13, a bidding list information generation and browsing processing unit 14, a negotiation assistance processing unit 15, an order reception and placement confirmation processing unit 16, and an order form generation and notification processing unit 17. Any of these processing units 11 to 17 are implemented by causing a hardware processor of the control unit 1 to execute a program stored in the program storage unit 2.

The order placement required information registration and management processing unit 11 receives the assembly drawing of a product, the contents of manufacturing instruction designating processing methods, processing processes and the like of the parts used for the product, and the specification information designating materials, finishing methods and the like of the parts from each of the first terminals MA1 to MAn of the product manufacturers (set manufacturers) via the communication I/F 4. Then, the order placement required information registration and management processing unit 11 performs processing of storing, as information required for order placement for the parts, the received items of information in the order placement required information storage unit 31. Moreover, the order placement required information registration and management processing unit 11 generates a parts list from the received assembly drawing mentioned above, and also performs processing of generating manufacturing instruction information on a part-by-part basis based on the contents of manufacturing instruction and the specification information mentioned above.

The bidding item information generation and publication processing unit 12 receives bidding conditions and order placement information for each part from each of the first terminals MA1 to MAn of the product manufacturers (set manufacturers) via the communication I/F 4. Then, the bidding item information generation and publication processing unit 12 performs processing of generating bidding item information for each part on the basis of the received bidding conditions and order placement information mentioned above and the aforementioned manufacturing instruction information stored in the aforementioned order placement required information storage unit 31 to store it in the bidding item information storage unit 32.

Notably, the bidding item information generation and publication processing unit 12 may comprise a recommendation function of selecting parts manufacturers that satisfy the aforementioned bidding conditions and transmitting the aforementioned bidding item information to the second terminals MB1 to MBm of the selected parts manufacturers from the communication I/F 4.

When bidding information is transmitted from any of the second terminals MB1 to MBm of the parts manufacturers (processing agents) during the disclosure period for each item of the aforementioned bidding item information, the bidding information acquisition and browsing processing unit 13 performs processing of receiving the bidding information via the communication I/F 4 and storing the received bidding information mentioned above, associating it with the aforementioned bidding item information, in the bidding information storage unit 33.

When a plurality of items of bidding information are stored in the aforementioned bidding information storage unit 33 during the disclosure period of the aforementioned bidding item information, the bidding list information generation and browsing processing unit 14 performs processing of generating list information of those to store it in the bidding list information storage unit 34. Moreover, when a browsing request for the aforementioned bidding information is sent from any of the first terminals MA1 to MAn of the product manufacturers (set manufacturers), the bidding list information generation and browsing processing unit 14 performs processing of reading the corresponding bidding list information from the bidding list information storage unit 34 and transmitting it to the relevant one of the first terminals MA1 to MAn as the requester from the communication I/F 4.

The negotiation assistance processing unit 15 provides a message exchange function for the first terminals MA1 to MAn of the product manufacturers (set manufacturers) and the second terminals MB1 to MBm of the parts manufacturers (processing agents). Accordingly, the negotiation assistance processing unit 15 enables transmission of messages for quotation negotiation and the like between the product manufacturers and the parts manufacturers.

When selection information for the parts manufacturer (processing agent) as the order recipient is received from any of the first terminals MA1 to MAn of the product manufacturers (set manufacturers), the order reception and placement confirmation processing unit 16 transmits order placement establishment notification to the relevant one of the second terminals MB1 to MBm for the selected parts manufacturer. Then, the order reception and placement confirmation processing unit 16 afterward performs processing of receiving confirmation information for the order reception and placement conditions individually input at each of the first terminals MA1 to MAn of the product manufacturers and the second terminals MB1 to MBm of the parts manufacturers via the communication I/F 4 and storing the received information for confirming the order placement conditions and the order reception conditions mentioned above in the order reception and placement confirmation information storage unit 35.

The order form generation and notification processing unit 17 generates order form information for each bidding item on the basis of the bidding item information stored in the bidding item information storage unit 32 and the aforementioned confirmation information for the order reception and placement conditions stored in the order reception and placement confirmation information storage unit 35. Then, the order form generation and notification processing unit 17 performs processing of transmitting the generated order form information mentioned above along with the aforementioned manufacturing instruction information stored in the bidding item information storage unit 32 to the relevant one of second terminals MB1 to MBm for the parts manufacturer (processing agent) as the order recipient.

### (Exemplary Operations)

Next, exemplary operations of the apparatus configured as above are described.

### (I) Overall Operation of Manufacturing Ordering Assistance Processing

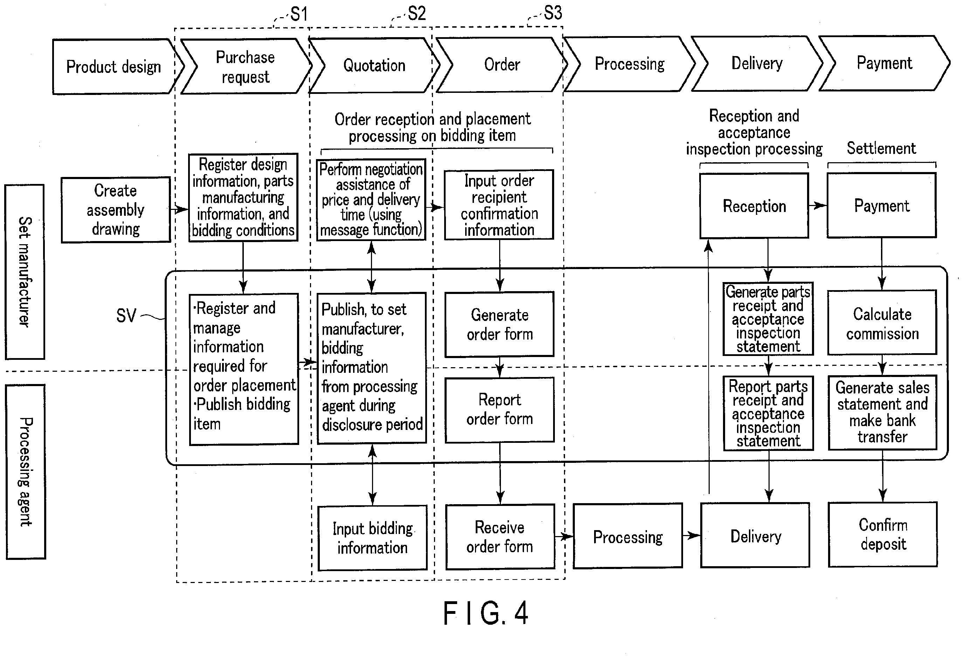

FIG. 4 is a flowchart showing the summary of overall processing procedures and processing contents of manufacturing ordering assistance processing by the server device SV.

In the order of product design, a purchase request S1, a quotation S2, an order S3, processing, delivery, and payment in time series, the server device SV performs assistance operations for those. Notably, while in this embodiment, there is exemplarily described a case where the server device SV performs assistance operations only for the purchase request, the quotation, the order, the delivery, and the payment, the server device SV may perform assistance operations for the product design and the processing.

In the assistance operation for the purchase request S1, there are performed processing of receiving the design information, the parts manufacturing information, the bidding conditions and the order placement information sent from the first terminals MA1 to MAn of the product manufacturers (set manufacturers) to perform unified registration and management of these items of information according to order placement, and based on the aforementioned items of information, processing of generating the bidding item information to publish it to the parts manufacturers (processing agents). In the aforementioned unified registration and management processing of information, there may be performed processing of grouping ordered parts.

In the assistance operation for the quotation S2, there is performed processing for receiving the bidding information with respect to the aforementioned bidding item information published to the parts manufacturers (processing agents) from the parts manufacturers and presenting this bidding information to the product manufacturers (set manufacturers) afterward to assist the parts manufacturers and the product manufacturers in negotiating the price, the delivery time and the like.

In the assistance operation for the order S3, from the product manufacturer (set manufacturer) and the parts manufacturer as the order recipient, there is received information for confirming the order reception and placement conditions including the price, the delivery time and the like that they have agreed on in the aforementioned assistance for the quotation S2. Then, there is performed processing of generating order form information on the basis of the bidding item information generated in the aforementioned assistance for the purchase request S1 and the aforementioned confirmation information for the order reception and placement conditions. Moreover, in the assistance operation for the order S3, there is performed processing of reporting the generated order form information mentioned above along with the manufacturing instruction information generated in the aforementioned assistance for the purchase request S1 to the parts manufacturer as the order recipient.

In the assistance operation for the delivery, the parts are delivered to the product manufacturer (set manufacturer) from the parts manufacturer (processing agent), and there is performed processing of generating, when delivery acknowledgement notification is received from the product manufacturer (set manufacturer), a receipt and an acceptance inspection statement for the parts and reporting them to the parts manufacturer (processing agent).

In the assistance operation for the payment, there is performed processing of calculating, when payment notification is received from the aforementioned product manufacturer (set manufacturer), a commission, and in addition, generating a sales statement to make a bank transfer for the charge to the parts manufacturer (processing agent).

### (II) Unified Registration and Management of Information According to Order Placement

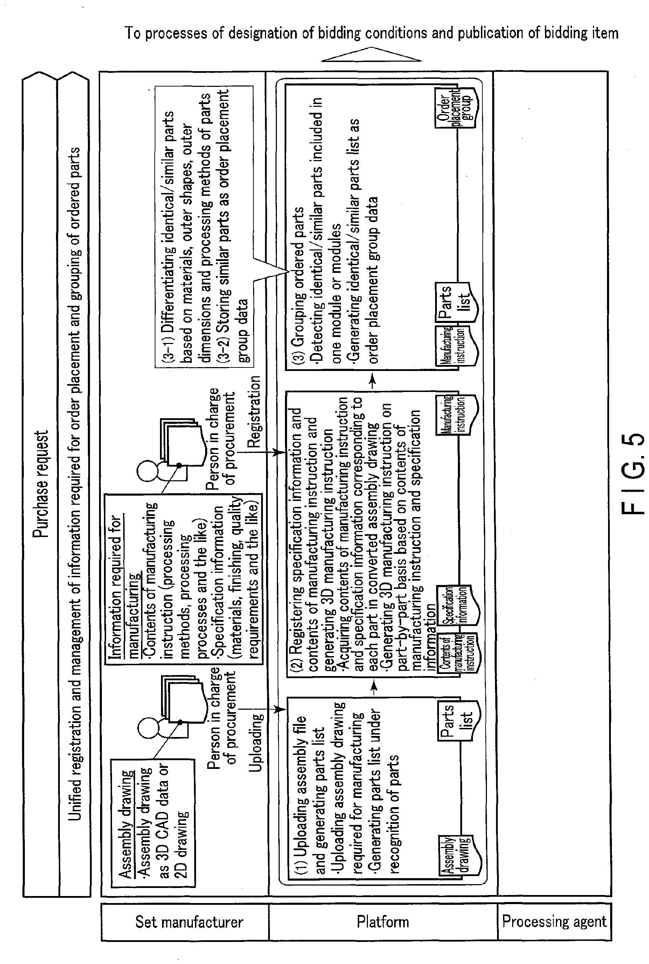

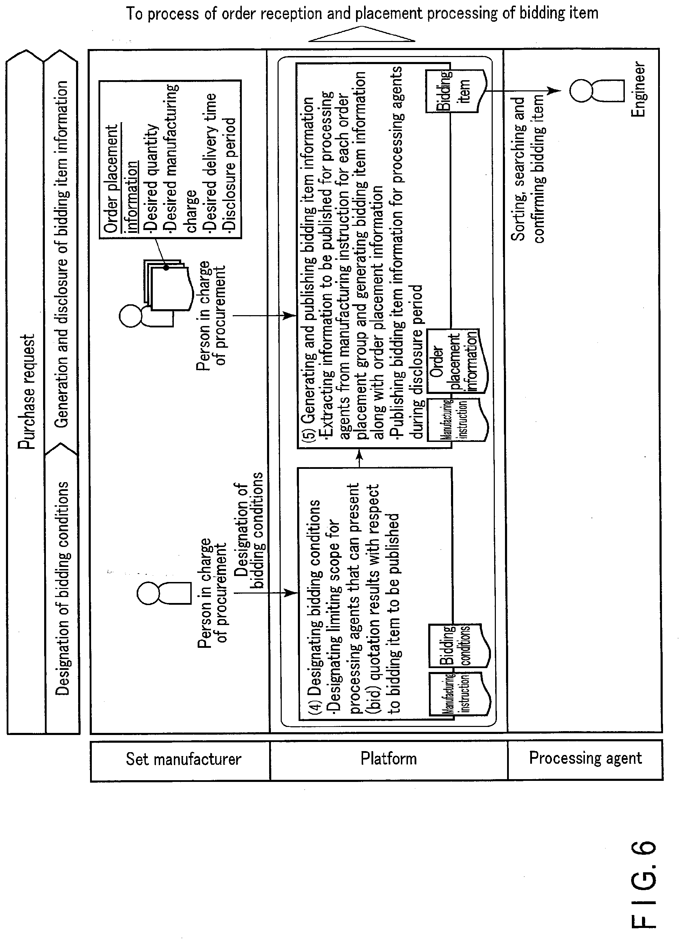

FIG. 5 is a diagram showing exemplary operations from acquisition of the design information to grouping of the ordered parts by the server device SV in the aforementioned purchase request S1, and FIG. 6 is a diagram showing exemplary operations from acquisition of the manufacturing resource information to generation and publication of the bidding item information subsequently to the aforementioned order placement grouping processing.

### (1) Acquisition of Design Information and Generation of Parts List

At the product manufacturer (set manufacturer), a person in charge of design by way of example creates the assembly drawing of a product with a CAD system. While the assembly drawing is created, for example, as 3D data, it may be 2D data or both of those may be created. Moreover, at the product manufacturer (set manufacturer), the person in charge of design also generates information required for manufacturing the parts forming the aforementioned product. The information required for manufacturing includes information designating the contents of manufacturing instruction, and information designating specifications, for example. The information designating the contents of manufacturing instruction is information designating processing methods and processing processes, for example. The information designating specifications is information designating materials, finishing methods and the like, for example.

At the product manufacturer (set manufacturer), when requesting order placement for the aforementioned parts forming the product, a person in charge of procurement by way of example first sends a transmission request for design information to the server device SV using the first terminal MA1, and subsequently, there is performed processing of transmitting (uploading) data of the aforementioned assembly drawing along with attribute information of the product to the server device SV.

### (1-1) Acquisition of Design Information

The server device SV is monitoring the aforementioned transmission request under the control of the order placement required information registration and management processing unit 11. When the aforementioned transmission request comes from the first terminal MA1 of the product manufacturer (set manufacturer) in this state, the order placement required information registration and management processing unit 11 receives the aforementioned design information and attribute information of the product transmitted from the first terminal MA1 via the communication I/F 4, and stores the received design information, associating it with identification information (product manufacturer ID) of the product manufacturer as the requestor and identification information (product ID) of the product which are included in the attribute information simultaneously received, in the order placement required information storage unit 31.

Notably, depending on the product manufacturer (set manufacturer), there is a case where it uses a different kind and/or version of application of the CAD system. Therefore, the server device SV preferably requests the product manufacturer to transmit the data of the assembly drawing in a form of intermediate file.

### (1-2) Generation of Parts List Information

Next, the server device SV generates parts list information as follows on the basis of the aforementioned design information under the control of the order placement required information registration and management processing unit 11.

Namely, the order placement required information registration and management processing unit 11 reads the design information from the aforementioned order placement required information storage unit 31, and first, recognizes a solid shape for each component part, for example, using pattern matching on the basis of the data of the assembly drawing included in the design information. Then, the order placement required information registration and management processing unit 11 differentiates component parts on the basis of the recognized solid shapes mentioned above. Notably, when the assembly drawing data included in the design information is 2D CAD drawing data, the order placement required information registration and management processing unit 11 converts 2D CAD figure data into 3D CAD drawing data, and after that, performs the aforementioned recognition processing on the component parts.

The order placement required information registration and management processing unit 11 associates the differentiated component parts mentioned above with respective part IDs thereby to make a list of those, and associates information representing the listed parts list with the product ID to store it in the order placement required information storage unit 31.

### (2) Generation of Parts Manufacturing Instruction

### (2-1) Acquisition of Information Required for Manufacturing Parts

Next, the server device SV transmits a request for requesting information required for manufacturing the individual component parts on the basis of the aforementioned parts list information stored in the order placement required information storage unit 31 to the first terminal MA1 of the product manufacturer (set manufacturer) as the requestor from the communication I/F 4 under the control of the order placement required information registration and management processing unit 11.

Notably, while the order placement required information registration and management processing unit 11 may transmit the request for all the component parts in this stage, when the 3D CAD drawing data by way of example acquired as the design information is supplemented with the manufacturing instruction information and the specification information, it may select parts that lack information required for manufacturing themselves and transmit the request only for the selected parts. For example, since there is occasionally a case where the 3D CAD drawing data is not supplemented with outer dimensions and the like of convex shapes, it selects such parts and transmits the request for those.

In response to this, a person in charge of procurement by way of example of the product manufacturer (set manufacturer) transmits the information required for manufacturing the individual component parts, for example, information indicating the contents of manufacturing instruction designating the processing methods and the processing processes and the specification information designating the materials and the required finishing methods from the first terminal MA1 in response to the aforementioned request.

Under the control of the order placement required information registration and management processing unit 11, the server device SV receives the information indicating the contents of manufacturing instruction for the parts and the specification information which are transmitted from the aforementioned first terminal MA1 via the communication I/D 4, and associates the information indicating the contents of manufacturing instruction for the parts and the specification information which are thus received with the individual part IDs to store those temporarily in the order placement required information storage unit 31.

### (2-2) Generation of Manufacturing Instruction for Parts

Subsequently, the server device SV describes the information indicating the contents of manufacturing instruction and the specification information mentioned above which are thus acquired for each part, for example, in a manufacturing instruction format prepared in advance under the control of the order placement required information registration and management processing unit 11. In addition, the server device SV generates for each part the manufacturing instruction information by attaching a file of its 3D image (along with its 2D image as needed) and further adding data indicating points to be considered according to processing. Then, the order placement required information registration and management processing unit 11 associates the generated manufacturing instruction information mentioned above with the product ID to store it in the order placement required information storage unit 31.

The manufacturing instruction information includes, for example, data respectively indicating the part name, the part number, the part quantity, the material, the outer dimensions, the geometrical tolerance, the hole standards, the bending angle tolerance, the processing method, the processing process, the 2D image data, the 3D image data, and data indicating the quality requirements and the points to be considered regarding processing.

### (3) Grouping of Ordered Parts

### (3-1) Differentiation of Parts

Next, for all the parts forming the product, the server device SV determines whether or not there are any parts that are the same or similar within a predetermined range in the material, the outer shape, the outer dimensions and the processing method on the basis of the aforementioned manufacturing instruction information stored in the aforementioned order placement required information storage unit 31 under the control of the order placement required information registration and management processing unit 11.

### (3-2) Generation of Order Placement Group

Subsequently based on the results of the aforementioned determination, the order placement required information registration and management processing unit 11 groups all the parts forming the product mentioned above into sets of ones that are the same or similar within a predetermined range in the material, the outer shape, the outer dimensions and the processing method. Then, the order placement required information registration and management processing unit 11 sets each grouped parts group to an order placement group for the parts to store it, attaching a group ID thereto, in the order placement required information storage unit 31.

Notably, when the product includes a plurality of modules, the ordered parts may be grouped with all the parts forming these modules being as targets or may be grouped on a module-by-module basis.

### (III) Generation and Publication of Bidding Item Information

### (4) Designation of Bidding Conditions

The server device SV receives information representing bidding conditions for the parts manufacturers (processing agents) from each of the first terminals MA1 to MAn of the product manufacturers (set manufacturers) under the control of the bidding item information generation and publication processing unit 12. The bidding conditions include, as bidding essential conditions or preferable conditions, the company evaluation (rank) as viewed from the product manufacturer, the number of transactions, and the presence or absence of IS09000 acquired, for example. Using the aforementioned bidding conditions, for example, the parts manufacturers (processing agents) that have "ISO9000 acquired" can be extracted, a list of them being listed.

### (5) Generation and Publication of Bidding Item Information (5-1) Generation of Bidding Item Information

The server device SV first acquires the order placement information from each of the first terminals MA1 to MAn of the product manufacturers (set manufacturers) under the control of the bidding item information generation and publication processing unit 12. The order placement information includes the desired quantity, the desired manufacturing charge, the desired delivery time, and the disclosure period.

Subsequently, for each part or for each parts group in the order placement group, the bidding item information generation and publication processing unit 12 extracts information to be disclosed for the parts manufacturers, for example, from the aforementioned manufacturing instruction information stored in the order placement required information storage unit 31. Then, the bidding item information generation and publication processing unit 12 combines each of the extracted items of information with the aforementioned bidding conditions and order placement information designated by the product manufacturer (set manufacturer) thereby to generate the aforementioned bidding item information corresponding to the part or the parts group. As a result, there is generated the bidding item information, for example, including information representing the part name, the parts grouping, the processing method, the material, the desired quantity, the desired manufacturing charge, the desired delivery time, the bidding essential conditions, and the bidding desired conditions.

### (5-2) Publication of Bidding Item Information

The server device SV sets the aforementioned bidding item information stored in the bidding item information storage unit 32 to the state where all the parts manufacturers can browse it under the control of the bidding item information generation and publication processing unit 12. In this stage, the bidding item information generation and publication processing unit 12 organizes all the items of bidding item information generated for the individual parts or the individual parts groups in the order placement group as a data file which can undergo sorting processing for each entry by a person in charge at each of the parts manufacturers (processing agents). Notably, when a list of the parts manufacturers as publication targets is beforehand generated, only the parts manufacturers (processing agents) described in the list may be set to the browsable state.

For example, using a general-purpose application program having sorting processing functions such as rearrangement processing and filtering processing on data, each of the aforementioned items of bidding item information is edited as a data file which can be executed by the aforementioned application program.

Then, when there is generated the aforementioned data file for publishing the bidding item information, the server device SV sets it to the state where all the parts manufacturers can browse it under the control of the bidding item information generation and publication processing unit 12. Notably, when there is generated the list of the parts manufacturers beforehand selected as the publication targets, the server device SV may transmit, for example, a mail in which a uniform resource locator (URL) indicating the place where the aforementioned bidding item information is stored is described toward the second terminals MB1 to MBm of the parts manufacturers (processing agents) described in the list. Namely, recommendation transmission of the bidding item information may be performed.

### (IV) Presentation of Quotation and Assistance of Quotation Negotiation

When the bidding item information is published, the server device SV subsequently performs processing regarding registration acceptance of bidding information and assistance of quotation negotiation as follows.

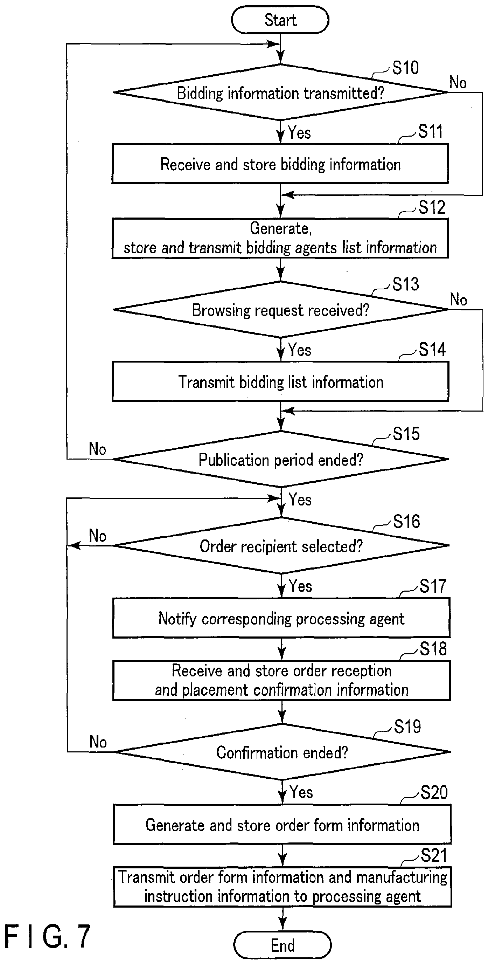

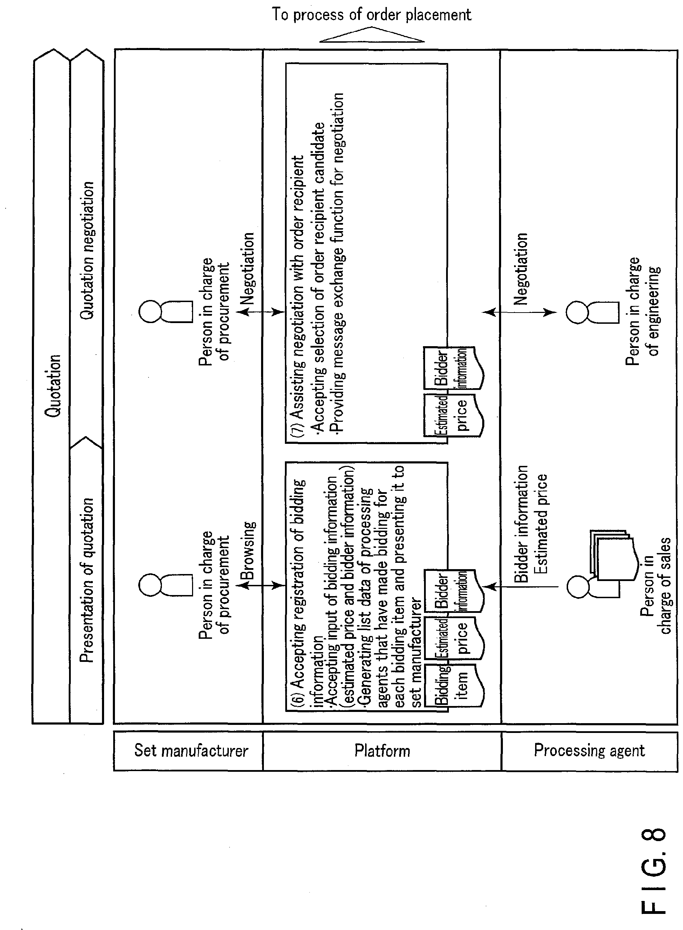

FIG. 7 is a flowchart exemplarily showing the processing procedure and the processing contents from registration acceptance processing of bidding information to generation and notification processing of order form information by the server device SV, and FIG. 8 is a diagram showing exemplary operations from the registration acceptance processing of bidding information to assistance processing of quotation negotiation.

### (6) Registration Acceptance of Bidding Information

### (6-1) Browsing of Bidding Item Information

In the state where the aforementioned bidding item information is published, all the parts manufacturers (processing agents) or the parts manufacturers registered in the list can browse the bidding item information as follows.

For example, when a person in charge of sales of each of the parts manufacturers accesses the URL for bidding item publication from the relevant one of the second terminals MB1 to MBm, the server device SV transmits, in response to the access to the aforementioned URL, the data file for publishing the relevant bidding item information to the relevant one of the second terminals MB1 to MBm for the parts manufacturer as the access source.

Here, the data file for publishing the aforementioned bidding item information is the data file which can undergo sorting processing such as rearrangement processing and filtering processing. Therefore, the person in charge of sales of the parts manufacturer can perform sorting operation by a desired entry in the received bidding item information mentioned above, and thereby, can relatively easily find the bidding item information that corresponds to the part or the parts group that can be manufactured at its company to make bidding for that.

For example, there is performed filtering processing, for example, with the part name or the type among the entries in the bidding item information to select the bidding item information that corresponds to the desired part, and furthermore, there is performed filtering processing with the processing method to select the bidding item information that corresponds to the processing method that can be processed with a manufacturing facility at its company. Then, the bidding information is transmitted with respect to the selected bidding item information. The bidding information includes identification information (bidding item ID) of the bidding item, the estimated price, and the bidder information. The bidder information includes the company information of the parts manufacturer and the manufacturing resource information indicating the manufacturing capacity, for example. Notably, the bidding information may include information indicating the delivery time.

### (6-2) Reception and Storage of Bidding Information

Under the control of the bidding information acquisition and browsing processing unit 13, during the disclosure period designated by the aforementioned order placement information, in step S10, the server device SV is monitoring transmission of the bidding information from each of the second terminals MB1 to MBm. When the bidding information is transmitted, for example, from the second terminal MB1 in this state, in step S11, the bidding information acquisition and browsing processing unit 13 receives the aforementioned bidding information via the communication I/F 4, and stores it, associating it with the bidding item ID, in the bidding information storage unit 33. Afterward, also when the bidding information is sent from any of the other second terminals MB2 to MBm, the bidding information acquisition and browsing processing unit 13 receives the bidding item information likewise to store it, associating it with the bidding item ID, in the bidding information storage unit 33.

### (6-3) Generation and Browsing of Bidding List Information

During the aforementioned disclosure period, the server device SV reads the aforementioned bidding information stored in the bidding information storage unit 33 under the control of the bidding list information generation and browsing processing unit 14. Then, in step S12, the bidding list information generation and browsing processing unit 14 generates the bidding list information for each bidding item ID, and stores the generated bidding list information, associating it with the bidding item ID, in the bidding list information storage unit 34.

When generating the aforementioned bidding list information, the bidding list information generation and browsing processing unit 14 rearranges the order of displaying the items of bidding information, for example, in accordance with a predefined rule. For example, the bidding list information generation and browsing processing unit 14 rearranges the items of bidding information in the increasing order of the estimated price, or when the bidding information includes the information indicating the delivery time, rearranges the items of bidding information in the increasing order of the delivery time. Moreover, based on the bidder information included in the bidding information and the bidding conditions beforehand designated by the product manufacturer, the bidding list information generation and browsing processing unit 14 determines whether or not the parts manufacturer as the transmission source of the bidding information satisfies the bidding conditions, and adds flag information representing the determination result to the corresponding bidding information in the aforementioned bidding list information. Notably, the bidding list information generation and browsing processing unit 14 performs the aforementioned rearrangement processing on the bidding information also when the person in charge of procurement of the product manufacturer performs sorting operation.

### (6-4) Browsing of Bidding Information

By accessing the URL of the server device SV from the corresponding one of the first terminals MA1 to MAn, the person in charge of procurement of the product manufacturer can browse the bidding information with respect to the bidding item information corresponding to the part that it has placed the order for. Notably, in order to facilitate the browsing of the bidding information by the product manufacturer, after the bidding item information starts to be disclosed, the server device SV may send a notification mail presenting the URL representing the access destination to the relevant one of the first terminals MA1 to MAn for the corresponding product manufacturer.

Under the control of the bidding list information generation and browsing processing unit 14, in step S13, the server device SV is monitoring reception of a browsing request. Upon receipt of the browsing request transmitted, for example, from the first terminal MA1 of the product manufacturer via the communication I/F 4 in this state, in step S14, the bidding list information generation and browsing processing unit 14 reads the bidding list information corresponding to the bidding item ID included in the aforementioned browsing request from the bidding list information storage unit 34, and transmits the bidding list information toward the first terminal MA1 as the requestor from the communication I/F 4.

Notably, there is repeated the series of processing from the registration acceptance of the bidding information to the generation and the transmission of the bidding list information mentioned above during the disclosure period of the bidding item information. Namely, the bidding list information is updated every time when new bidding information is registered during the disclosure period, the person in charge of procurement of the product manufacturer can confirm the status of bidding in real time by browsing the bidding list information after the update.

Moreover, when the person in charge of procurement of the product manufacturer performs the sorting operation on the aforementioned bidding list information with an arbitrary entry in the bidding information designated, the order of the items of bidding information is changed. As a result, the person in charge of procurement of the product manufacturer can rearrange the items of bidding information displayed as a list, for example, in the increasing order of the estimated price or in the increasing order of the delivery time. Moreover, when the data file of the bidding list information has the filtering function, only the parts manufacturers that satisfy the bidding essential conditions can also be extracted using this function.

### (7) Selection of Order Recipient Candidate and Negotiation Assistance

When the person in charge of procurement of the product manufacturer (set manufacturer) selects, at the second terminal MB1, the desired bidding information from the bidding list information being browsed, the selection notification for it is transmitted to the server device SV.

Under the control of the negotiation assistance processing unit 15, in step S16, the server device SV is monitoring reception of the aforementioned selection notification. Upon receipt of the aforementioned selection notification via the communication I/F 4 in this state, in step S17, the negotiation assistance processing unit 15 transmits the selection notification for the order recipient to the second terminal MB1 of the parts manufacturer as the registration source of the selected bidding information mentioned above from the communication I/F 4.

Afterward, between a person in charge of engineering of the parts manufacturer (processing agent) that has received the aforementioned selection notification and the person in charge of procurement of the product manufacturer (set manufacturer) that has selected this order recipient candidate, message transmission, for example, for quotation negotiation of the price, the delivery time and the like is enabled using the message exchange function provided by the server device SV. In this stage, the server device SV may store, as a negotiation history, messages transmitted and received between the parts manufacturer and the product manufacturer mentioned above in the data storage unit 3 under the control of the negotiation assistance processing unit 15.

### (V) Establishment of Order Recipient and Generation and Notification of Order Form

Next, the server device SV performs processing for establishing the order recipient and generation and notification of an order form as follows.

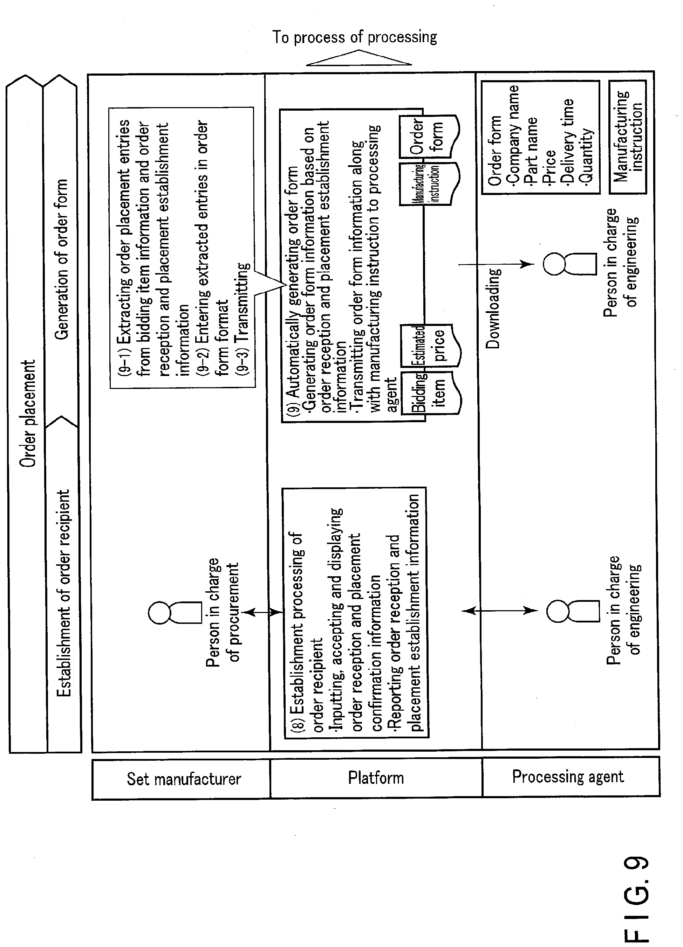

FIG. 9 is a diagram showing exemplary operations according to the establishment processing of the order recipient and the generation and notification processing of the order form by the server device SV.

### (8) Establishment Processing of Order Recipient

It is assumed that as a result of quotation negotiation between the aforementioned parts manufacturer (processing agent) selected as the order recipient candidate and the product manufacturer (set manufacturer) as the order placer, they agree on the order reception and placement conditions, and the establishment notification is transmitted from each of the first terminal MA1 of the product manufacturer and the second terminal MB1 of the parts manufacturer. In this case, under the control of the order reception and placement confirmation processing unit 16, in step S18, the server device SV first receives information indicating the order placement conditions and the order reception conditions which they have agreed on and which information is transmitted from each of the first terminal MA1 of the product manufacturer and the second terminal MB1 of the parts manufacturer via the communication I/F 4 to store it in the order reception and placement confirmation information storage unit 35. Namely, there is generated an agreement document for reconfirming the contents of agreement on the order reception and placement conditions.

The order reception and placement confirmation processing unit 16 of the server device SV transmits a data file of the generated agreement document mentioned above to each of the first terminal MA1 of the product manufacturer and the second terminal MB1 of the parts manufacturer from the communication I/F 4. Then, when approval information is reported from each of the terminals MA1 and MB1 mentioned above, in step S19, the order reception and placement confirmation processing unit 16 establishes the order reception and placement conditions in the aforementioned agreement document.

### (9) Automatic Generation of Order Form

Next, under the control of the order form generation and notification processing unit 17, in step S20, the server device SV generates order form information. For example, the bidding item information is read from the bidding item information storage unit 32, and the agreed order reception and placement conditions are read from the order reception and placement confirmation information storage unit 35. Then, the order form generation and notification processing unit 17 extracts information for an entry or entries required for order placement from each of the read items of information mentioned above and enters the extracted information for the entries in a beforehand prepared order form format, and thereby, generates the order form information to store it in the order form information storage unit 36. The order form information includes the name of the company as the order placer, the part name, the price, the delivery time, and the quantity, for example.

Subsequently, in step S21, the order form generation and notification processing unit 17 reads the generated order form information mentioned above from the aforementioned order form information storage unit 36, and likewise, reads the corresponding manufacturing instruction information from the bidding item information storage unit 32. Then, the order form generation and notification processing unit 17 transmits the read order form information and manufacturing instruction information mentioned above to the second terminal MB1 of the parts manufacturer established as the order recipient from the communication I/F 4.

### (Functions and Effects)

As mentioned above, according to an embodiment, in the server device SV, there is received and stored the bidding information transmitted from the terminal of the parts manufacturer with respect to the bidding item information, for each part, published in the browsable state, and it is set to the state where the product manufacturer can browse it only during a certain disclosure period. Moreover, the server device SV provides the message exchange function, and thereby, enables information exchange for quotation negotiation on the aforementioned bidding information between the terminal of the product manufacturer and the terminal of the parts manufacturer. Then, when the product manufacturer selects the parts manufacturer as the order recipient, there is generated and presented information for confirming the order reception and placement conditions to the product manufacturer and the parts manufacturer, and when both manufacturers agrees on those, there is generated the order form information on the basis of the aforementioned bidding item information and the aforementioned confirmation information of the order reception and placement conditions to report the order form information along with the manufacturing instruction information separately generated to the parts manufacturer as the order recipient.

According to an embodiment, this leads to the following functions and effects.
(1) The server device SV generates the bidding item information for the part to publish it to the parts manufacturer, and the parts manufacturer registers the bidding information with respect to the published bidding item information. Therefore, the product manufacturer does not need to select the parts manufacturer by itself to present the bidding item information therefor, and this can reduce a load regarding the parts order placement. Meanwhile, the parts manufacturer can browse the published bidding item information, and thereby, register the bidding information with respect to the desired bidding item information, which allows more order reception opportunities to be obtained.
(2) A plurality of items of bidding information registered by the parts manufacturers with respect to one item of bidding item information are integrated into the bidding list information for each bidding item, and the bidding list information is presented for browsing in the state where the product manufacturer can sort it arbitrarily by the estimated price or the delivery time as a key. Therefore, the product manufacturer can correctly select the bidding information coinciding with or close to the desired order placement conditions in a short time among the plurality of items of bidding information, which can enhance efficiency of selection work by the order recipient to reduce the load.
(3) Since the product manufacturer and the parts manufacturer use the message exchange function provided by the server device SV to make information exchange for quotation negotiation, they do not need to arrange location or communication media for negotiation separately, such as face-to-face meetings, phone calls, and mails, and thereby, they can make the quotation negotiation efficiently. Furthermore, the messages exchanged for the quotation negotiation are accumulated in the server device SV as a negotiation history, and thereby, the product manufacturer and the parts manufacturer can investigate the process of the negotiation as needed.
(4) In the server device SV, the information for confirming the order reception and placement conditions is generated and presented to the product manufacturer and the parts manufacturer, and the order form information is automatically generated upon agreement of both manufacturers to be sent to the parts manufacturer as the order recipient. Therefore, the product manufacturer itself does not need to generate an order form, and also thereby, a load required for parts order placement is reduced. Moreover, since the order form information is directly transmitted from the server device SV after the order placement establishment, order placement timing can be made early. Meanwhile, the parts manufacturer can also receive the order form information quickly after the order placement confirmation, which enables it to start manufacturing the part quickly. Moreover, since the order form information is generated in a fixed format, order reception processing can be automated.

### <Other Embodiments>

(1) For the embodiment, there has been exemplarily described a case where the server device SV stores the bidding list information in the simple browsable state and transmits the aforementioned bidding list information to the first terminal in response to a browsing request from the first terminal. Not limited to this, a server device SV may automatically transmit, to the first terminal, the bidding list information including the bidding information every time when the bidding information is newly received.
(2) For the embodiment, there has been exemplarily described a case where the server device SV provides the message exchange function for quotation negotiation to the product manufacturer and the parts manufacturer. It is not necessary to use the aforementioned message exchange function, and the product manufacturer and the parts manufacturer may perform quotation negotiation using any communication medium.
(3) For the embodiment, when the bidding item information is published, the bidding item information is set to the state where all the parts manufacturers can browse it. Not limited to this, parts manufacturers (processing agent) as publication targets may be preselected, a mail in which a URL as the access destination for the aforementioned bidding item information is described may be transmitted to the relevant ones of second terminals MB1 to MBm for the selected parts manufacturers, and these parts manufacturers may be enabled to browse the published item information by accessing the URL.
(4) In addition, there can also be implemented in various modes a configuration and an installation place of a manufacturing ordering assistance apparatus, and the processing contents and the processing procedures of acquisition processing the design information of a product and the information required for manufacturing the parts, generation processing of the parts list and the manufacturing instruction information, grouping processing of the ordered parts, acquisition processing of the manufacturing resource information, generation processing of the list of processing agents, generation processing of the bidding item information, and publication processing of the bidding item information, without departing from the spirit of the present invention. Moreover, there may be employed any type and the like of sorting function included in the data file for publishing the bidding item information.

Embodiments of the present invention have been described in detail as above, and the description above is merely illustration of the present invention in all respects. It is needless to say that they may be improved or modified in various manners without departing from the scope of the present invention. In other words, a specific configuration in accordance with an embodiment may be properly employed in implementing the present invention.

In short, the present invention is not limited to any of the embodiments above as it is but can be embodied by modifying components of those in its implementation phase without departing from its spirit. Moreover, various inventions may be formed by properly combining a plurality of components disclosed in the embodiments above. For example, some components may be eliminated from all the components shown for any of the embodiments. Furthermore, components of different embodiments may be properly combined.

### REFERENCE SIGNS LIST

- SV: Server device
- MA1 to MAn: First terminals of product manufacturers
- MB1 to MBm: Second terminals of parts manufacturers
- NW: Network
- 1: Control unit
- 2: Program storage unit
- 3: Data storage unit
- 4: Communication interface (communication I/F)
- 5: Bus
- 11: Order placement required information registration and management processing unit
- 12: Bidding item information generation and publication processing unit
- 13: Bidding information acquisition and browsing processing unit
- 14: Bidding list information generation and browsing processing unit
- 15: Negotiation assistance processing unit
- 16: Order reception and placement confirmation processing unit
- 17: Order form generation and notification processing unit
- 31: Order placement required information storage unit
- 32: Bidding item information storage unit
- 33: Bidding information storage unit
- 34: Bidding list information storage unit
- 35: Order reception and placement confirmation information storage unit
- 36: Order form information storage unit

## Claims

1. A manufacturing ordering assistance apparatus that enables data transmission between a first terminal used by a product manufacturer and a plurality of second terminals used by a plurality of parts manufacturers via a network, the apparatus comprising:
a manufacturing instruction information generation unit that generates manufacturing instruction information required for manufacturing a part included in design information sent from the first terminal, based on the design information;
a bidding item processing unit that acquires information designating a bidding condition for the part from the first terminal, generates bidding item information including a plurality of entries regarding bidding for the part, based on the acquired information designating the bidding condition and the manufacturing instruction information, and transmits the generated bidding item information to the second terminal;
a bidding information registration acceptance unit that receives bidding information by the parts manufacturer with respect to the bidding item information from the second terminal and transmits the received bidding information to the first terminal; and
an order form generation unit that upon receipt of notification that the parts manufacturer having registered the bidding information is selected as an order recipient from the first terminal, generates order form information representing an order placement content of the part, based on the bidding information and the corresponding bidding item information, and transmits the generated order form information and the manufacturing instruction information to the second terminal used by the parts manufacturer that has been selected as the order recipient.

2. The manufacturing ordering assistance apparatus according to claim 1, wherein the bidding information registration acceptance unit comprises:
a bidding list information generation unit that upon receipt of a plurality of items of the bidding information with respect to the bidding item information, generates list information of the plurality of items of bidding information to store the list information in a storage medium; and
a transmission unit that in response to a browsing request transmitted from the first terminal, reads the list information of the bidding information from the storage medium to transmit the list information to the first terminal as a requestor.

3. The manufacturing ordering assistance apparatus according to claim 2, wherein the bidding list information generation unit includes a function of editing, when the plurality of items of bidding information include a plurality of predefined items of entry information, at least one of the plurality of items of entry information as a data file capable of undergoing sorting processing.

4. The manufacturing ordering assistance apparatus according to claim 3, wherein when the plurality of items of bidding information includes entry information indicating an estimated price, the bidding list information generation unit generates list information having undergone sorting processing on the entry information indicating the estimated price in an order of the price.

5. The manufacturing ordering assistance apparatus according to claim 1, wherein the bidding information registration acceptance unit further comprises:
a determination unit that receives information regarding a manufacturing capacity of the parts manufacturer from the second terminal, and based on the received information regarding the manufacturing capacity and the information designating the bidding condition, determines whether or not the parts manufacturer has the manufacturing capacity that satisfies the bidding condition; and
an addition unit that adds information representing a determination result by the determination unit to the corresponding bidding information.

6. The manufacturing ordering assistance apparatus according to claim 1, further comprising a negotiation assistance unit that provides a message exchange function to the first terminal and the second terminal and receives and stores information that is transmitted between the first terminal and the second terminal using the message exchange function and relates to condition negotiation with respect to the bidding information.

7. A manufacturing ordering assistance method performed by a manufacturing ordering assistance apparatus that enables data transmission between a first terminal used by a product manufacturer and a plurality of second terminals used by a plurality of parts manufacturers via a network, the method comprising:
generating manufacturing instruction information required for manufacturing a part included in design information sent from the first terminal, based on the design information;
acquiring information designating a bidding condition for the part from the first terminal, generating bidding item information including a plurality of entries regarding bidding for the part, based on the acquired information designating the bidding condition and the manufacturing instruction information, and transmitting the generated bidding item information to the second terminal;
receiving bidding information by the parts manufacturer with respect to the bidding item information from the second terminal and transmitting the received bidding information to the first terminal; and
upon receipt of notification that the parts manufacturer having registered the bidding information is selected as an order recipient from the first terminal, generating order form information representing an order placement content of the part, based on the bidding information and the corresponding bidding item information, and transmitting the generated order form information and the manufacturing instruction information to the second terminal used by the parts manufacturer that has been selected as the order recipient.

8. A program for causing a hardware processor included in the manufacturing ordering assistance apparatus according to any of claims 1 to 6 to execute processing of the units included in the manufacturing ordering assistance apparatus.
